Europäisches Patentamt

European Patent Office

Office européen des brevets

(19)

(11) **EP 1 095 293 B1**

(12) **EUROPÄISCHE PATENTSCHRIFT**

(45) Veröffentlichungstag und Bekanntmachung des Hinweises auf die Patenterteilung:
**30.10.2002 Patentblatt 2002/44**

(51) Int Cl.$^7$: **G01S 7/40**

(21) Anmeldenummer: **99941384.2**

(22) Anmeldetag: **24.06.1999**

(86) Internationale Anmeldenummer:
**PCT/DE99/01845**

(87) Internationale Veröffentlichungsnummer:
**WO 00/000842 (06.01.2000 Gazette 2000/01)**

(54) **VERFAHREN ZUR SIMULATION VON ECHOSIGNALEN FÜR DOPPLER-RADAR-SYSTEME**

METHOD FOR SIMULATING ECHO SIGNALS FOR DOPPLER RADAR SYSTEMS

PROCEDE DE SIMULATION DE SIGNAUX D'ECHO POUR SYSTEMES DE RADAR DOPPLER

(84) Benannte Vertragsstaaten:
**DE FR GB IT**

(30) Priorität: **27.06.1998 DE 19828804**

(43) Veröffentlichungstag der Anmeldung:
**02.05.2001 Patentblatt 2001/18**

(73) Patentinhaber: **DORNIER GmbH**
**88039 Friedrichshafen (DE)**

(72) Erfinder:
• **FLACKE, Joachim**
**D-88677 Markdorf (DE)**
• **KAISER, Bruno**
**D-77948 Oberschopfheim (DE)**

(74) Vertreter: **Meel, Thomas**
**Patentassessor,**
**c/o Dornier GmbH**
**L H G**
**88039 Friedrichshafen (DE)**

(56) Entgegenhaltungen:
**GB-A- 2 221 590**

• **FLISS G G ET AL: "PORTABLE DOPLER CW-RADAR CALIBRATOR" NAVY TECHNICAL DISCLOSURE BULLETIN, US, OFFICE OF NAVAL RESEARCH. ARLINGTON, Bd. 14, Nr. 1, Seite 40-45 XP000099160**

**Beschreibung**

Die Erfindung betrifft ein Verfahren zur Simulation von Echosignalen für Doppler-Radar-Systeme nach dem Oberbegriff des Patentanspruchs 1.

Zur Überprüfung und zum Test von Doppler-Radar-Systemen werden häufig Radar-Simulatoren eingesetzt, die ein Radarsignal des zu prüfenden Doppler-Radar-Systems empfangen und mit einer Dopplerverschiebung beaufschlagt wieder zum Radar zurücksenden.

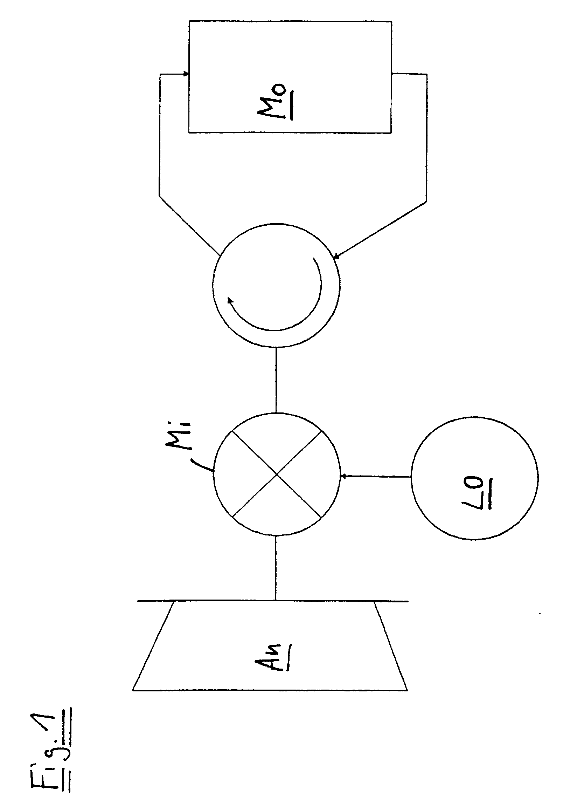

Diese Simulatoren arbeiten üblicherweise nach folgendem Prinzip (Fig. 1):

Das Sendesignal des Doppler-Radar-Systems wird von der Simulatorantenne An empfangen und im Mischer Mi auf eine Zwischenfrequenz (ZF) umgesetzt. Das Bezugszeichen LO bezeichnet den für die Umsetzung in die Zwischenfrequenz eingesetzten Local Oszillator. In der ZF-Ebene wird dieses Signal in einem Modulator Mo mit einer Dopplerfrequenz beaufschlagt. Der Modulator kann als einzelner Mischer aufgebaut sein, um ein Zweiseitenband Dopplersignal zu erzeugen, oder er ist als Einseitenband(ESB)-Modulator für die Erzeugung eines Einseitenband-Dopplersignals konzipiert. Im Anschluß an die Modulation geschieht, wenn notwendig, noch eine Verzögerung dieses Signals bevor es dann auf die Radarfrequenz (HF) wieder hochgemischt wird. Das so modulierte Signal wird über die Simulatorantenne An zum Radar zurückgestrahlt und kann wie ein Echosignal verarbeitet werden. Ein derartiger Simulator ist zum Beispiel in 'Simulation von Radarzielen', G. Plasberg, Frequenz 45(1991) 5-6 in 'Portable Dopler CW-Radar Calibrator', G.G. Fliss et al. disclosure bulletin, US Office of Naval Research, Arlington, Vol. 14, NR1, Seiten 40-46, XP000099160 order in GB-A-2 221 590 beschrieben.

Die US 3,329,953 offenbart ein weiteres gattungsgemäßes Verfahren, bei dem die Simulation der Echosignale mit Hilfe eines bidirektionalen Phasenschiebers, der vor einen Zirkulator geschaltet ist, erfolgt. Die anderen Ausgänge des Zirkulators sind entweder durch Kurzschlüsse abgeschlossen oder über einen Verstärker zur Erhöhung des simulierten Signals miteinander verbunden.

Aufgabe der Erfindung ist es, ein Verfahren zur Simulation von Echosignalen für Doppler-Radar-Systeme zu schaffen, das kostengünstig realisiert werden kann.

Diese Aufgabe wird mit dem Verfahren nach Anspruch 1 gelöst. Vorteilhafte Ausführungen der Erfindung sind Gegenstände weiterer Ansprüche.

Viele Doppler-Radar-Systeme weisen im Frontend einzelne Schalter auf, die zum Beispiel zur Umschaltung vom Sende- auf den Empfangszweig eingesetzt werden oder für die Aktivierung unterschiedlicher Antennen notwendig sind. Zum Beispiel verfügen Radar-Systeme für die Automotive Intelligent Cruise Control, AICC, in den meisten Fällen über mehrere Antennen, zwischen denen umgeschaltet wird.

Erfindungsgemäß werden diese Schalter genutzt, um das Doppler-Radar-System selbst oder deren Frontend als Doppler-Simulator zu betreiben. Dazu wird der Schalter mit einer Frequenz umgeschaltet, die der zu simulierenden Dopplerfrequenzverschiebung entspricht.

Das erfindungsgemäße Verfahren kann insbesondere für Meßzwecke zur Überprüfung von Doppler-Radar-Systemen eingesetzt werden.

Darüberhinaus kann das vom Doppler-Simulator erzeugte Signal im Rahmen eines Transponderverfahrens auch als Transponder eingesetzt werden. Dieser arbeitet mit einem identischen System zusammen, das als Abfrager (Interrogator) dient. Wird das vom Interrogator abgesandte Radarsignal vom Transponder empfangen, so wird es von diesem mit einer Dopplerfrequenzverschiebung beaufschlagt und an den Interrogator zurückgesandt. Sind mehrere Transponder vorhanden, so erkennt der Interrogator den jeweiligen Transponder an der Größe der vom Transponder erzeugten Frequenzverschiebung.

Der Vorteil des erfindungsgemäßen Verfahrens liegt insbesondere darin, daß das einen Schalter aufweisende Doppler-Radar-System vom Simulator- oder Transponder-Mode in den normalen Radar-Mode umgeschaltet werden kann. Außerdem kann die Auswertung der Simulator- oder Transponder-Information auf dem gleichen Weg erfolgen, wie die Auswertung normaler Echosignale.

Mit dem erfindungsgemäßen Verfahren kann das Radarsignal bereits in der HF-Ebene moduliert werden, so daß eine Frequenzumsetzung entfällt. Dies führt zu einem einfachen und preiswerten Aufbau des Simulators. Darüberhinaus kann zur Simulation auf ein verfügbares Radar-Frontend zurückgegriffen werden, wobei nicht unbedingt typengleiche Radarsysteme eingesetzt werden müssen. So kann z.B. das Frontend eines Automobilradars grundsätzlich als Dopplersimulator für andere Dopplerradare eingesetzt werden.

Darüberhinaus bietet das erfindungsgemäße Verfahren insbesondere die folgenden Vorteile:

- die Dopplersimulation kann unabhängig von Frequenzschwankungen des Radar-Sendesignals durchgeführt werden;

- das Sendesignal des Radars kann nahezu verzögerungsfrei und mit einer Dopplerfrequenz beaufschlagt wieder zurückgesendet werden;

- das Verfahren ist anwendbar für Pulsmodulierte wie auch für Dauerstrich (CW) Signalformen.

Die Erfindung wird anhand konkreter Ausführungsbeispiele erläutert. Es zeigen:

Fig. 1: Blockschaltbild eines bekannten Radarsimulators mit Frequenzumsetzung, wie in der Beschreibungseinleitung erläutert;

Fig. 2 : Blockschaltbild eines typischen Doppler-Radars (z.B. Automobil-Radar), das für die Durchführung des erfindungsgemäßen Verfahrens eingesetzt werden kann;

Fig. 3: ein mit dem erfindungsgemäßen Verfahren erzeugtes typisches Zweiseitenband-Dopplerspektrum.

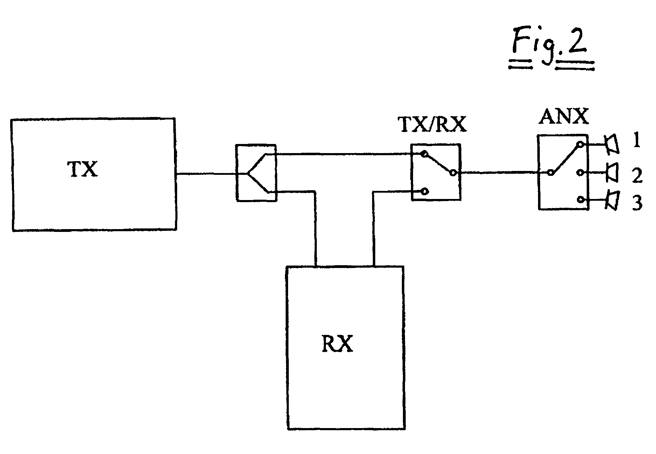

Anhand von Fig. 2 wird der Ablauf des erfindungsgemäßen Verfahrens erläutert. Dargestellt ist ein typisches Blockschaltbild eines Doppler-Radar-Systems bzw. dessen Frontend für Automobilanwendungen. Das im Sendeteil TX erzeugte Sendesignal wird über den Sendeweg auf einen Sende-Empfangsumschalter TX/RX geleitet. Hinter diesem Umschalter gelangt das Signal auf den Antennenumschalter ANX, der eine der Antennen 1,2,3 auswählt. Das Echosignal wird über den selben Antennenumschalter ANX mittels des Sende-Empfangsumschalters TX/RX auf den Empfangszweig RX geleitet, wo es verarbeitet wird und wo unter anderem die Doppler-Information extrahiert wird. Der Sende- Empfangsumschalter TX/RX wird üblicherweise nur in gepulsten Systemen eingesetzt, in FMCW Systemen ist der Empfangszweig ständig geöffnet. Die Schalter sind unabhängig voneinander einstellbar.

Gemäß der Erfindung wird ein derartiges System als Doppler-Simulator betrieben, indem einer der beiden Schalter mit einer Frequenz getaktet wird (zum Beispiel durch externe Triggerung oder durch eine Modifikation in der Takterzeugung), die der gewünschten Doppler-Frequenzverschiebung entspricht. Durch diese Umtastung zwischen zwei unterschiedlichen Abschlüssen (offen $\longleftrightarrow$ Sende- oder Empfangszweig) wird ein in die Antenne einfallendes Signal mit zwei unterschiedlichen Phasenzuständen im Takte der Umschaltfrequenz reflektiert. Dieses reflektierte Signal, das entsprechend der Umschaltfrequenz mit einer Dopplerverschiebung beaufschlagt ist, wird über die Antenne wieder abgestrahlt.

Im einzelnen gilt folgendes: Die im angegebenen Beispiel 3 Antennen weisen unterschiedliche Hauptstrahlrichtungen auf. Ein Eingangssignal in Antenne 1 wird bei entsprechender Schalterstellung über den Schalter ANX in den Sende-(TX) oder Empfangszweig (RX) des Radars geleitet, je nach Stellung des Schalters RX/TX. Die Reflexion in dieser Stellung des Schalters ANX wird durch den Schalter TX/RX und die nachfolgende Schaltung bestimmt. Bei Umschaltung des Schalters ANX auf eine andere Antenne 2,3 legt die offene Antenne 1 (Leerlauf) die Reflexion des einfallenden Signals fest. Das Schalten des Schalters ANX zwischen den beiden Reflexionen mit einer Frequenz $f_D$ bewirkt eine regelmäßige Phasenverschiebung des von der Anordnung reflektierten Signals, die sich als Dopplerverschiebung in diesem Signal bemerkbar macht. Die Dopplerfrequenz entspricht dabei der Schaltfrequenz

$f_D$. Das reflektierte Signal wird als Zweiseitenbandsignal gemessen.

Ein Radarsystem, dessen Sendefrequenz im Frequenzbereich des Simulators liegt, empfängt somit bei Anstrahlung des Simulators das dopplerverschobene Echosignal. Die Signalanalyse kann mit den in üblichen Doppler-Radar-Systemen vorhandenen Algorithmen erfolgen, da das simulierte Signal einem Dopplersignal, das durch ein bewegtes Ziel verursacht wird, vergleichbar ist.

Ein HF-Eingangssignal in den Simulator, beispielsweise von der Form

$$E_I(t) = E_0 {}^* \cos(\omega_0 t),$$

wird entsprechend der Schaltfrequenz $f_D$ des Schalters im Simulator moduliert und als

$$E_R(t) = E_R {}^* \{\cos[(\omega_0 - \omega_D)^* t] + \cos[(\omega_0 + \omega_D)^* t]\}$$

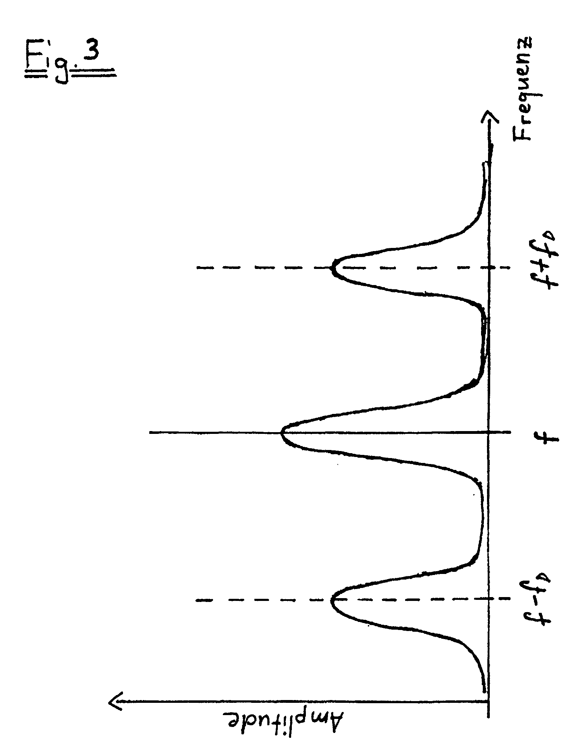

wieder abgestrahlt. Das Signal $E_R(t)$ stellt ein Zweiseitenbandsignal dar, das um die Modulationsfrequenz $f_D$ von der Sendefrequenz in beide Richtungen verschoben ist. Fig. 3 zeigt die typische spektrale Darstellung dieses Signals mit f als Trägerfrequenz und mit den Seitenbändern bei f- $f_D$, f+ $f_D$.

Bei entsprechender Auslegung der Schalteransteuerung kann das vollständige Doppler-Spektrum durchfahren werden.

**Patentansprüche**

1. Verfahren zur simulation von Echosignalen für Radarsysteme und Transponderverfahren, wobei ein von einem ersten zu überprüfenden Doppler-Radar-System, das als Interrogator arbeitet ein Radarsignal gesendet wird, das von einem zweiten Doppler-Radar-System oder Doppler-Radarfrontend, das sowohl als Radar-Echosimulator als auch als Transponder arbeitet, empfangen wird, von diesem mit einer Dopplerfrequenzverschiebung beaufschlagt wird und zum Interrogator zurückgesendet wird, wobei das zweite Doppler-Radar-System oder Doppler-Radarfrontend mit mindestens einem Schalter (TX/RX,ANX) ausgestattet ist und in seinem Sende/Empfangszweig einen HF-Schalter aufweist, wobei der HF-Schalter (TX/RX,ANX) mit einer Frequenz die der im Transponder zu erzeugenden Dopplerfrequenzverschiebung entspricht, umgeschaltet wird, wobei das einfallende Radarsignal an den durch die in den beiden Stellungen des Schalters (TX/RX,ANX) realisierten verschiedenen Leitungsabschlüssen mit unterschiedlichen Phasenzuständen reflektiert wird, und der Interrogator den Transponder an der Größe der im Transponder erzeugten Frequenzverschiebung erkennt.

**2.** Verfahren nach Anspruch 1, **dadurch gekennzeichnet, daß** der HF-Schalter ein Antennenumschalter ist.

## Claims

**1.** Method for simulation of echo signals for radar systems and a transponder method with a first Doppler radar system which is to be checked and which operates as an interrogator transmitting a radar signal that is received by a second Doppler radar system or Doppler radar front end which operates both as a radar echo simulator and as a transponder, with the second Doppler radar system or Doppler radar front end applying a Doppler frequency shift to the received radar signal and sending the radar signal back to the interrogator, with the second Doppler radar system or Doppler radar front end being equipped with at least one switch (TX/RX, ANX) and having an RF switch in its transmission/reception path, with the RF switch (TX/RX, ANX) being switched at a frequency which corresponds to the Doppler frequency shift to be produced in the transponder, with the incident radar signal being reflected with different phase angles on the various line terminations which are established in the two positions of the switch (TX/RX, ANX) and the interrogator identifying the transponder from the magnitude of the phase shift which is produced in the transponder.

**2.** Method according to Claim 1, **characterized in that** the RF switch is an antenna changeover switch.

## Revendications

**1.** Procédé de simulation de signaux d'écho pour systèmes de radar et procédé de transpondeur avec lequel un premier système de radar doppler à contrôler qui fait office d'interrogateur émet un signal radar qui est reçu par un deuxième système de radar doppler ou terminal radar doppler, lequel fait à la fois office de simulateur d'écho radar et de transpondeur, subit par celui-ci un double décalage de fréquence puis est renvoyé à l'interrogateur, le deuxième système de radar doppler ou terminal radar doppler étant équipé d'au moins d'un commutateur (TX/RX, ANX) et présentant un commutateur HF dans sa branche d'émission/réception, le commutateur HF (TX/RX, ANX) étant commuté à une fréquence qui correspond au double décalage de fréquence à générer dans le transpondeur, le signal radar reçu étant réfléchi avec des situations de phase différentes au niveau des terminaisons de ligne différentes réalisées dans les deux positions du commutateur (TX/RX, ANX) et l'interrogateur reconnaît le transpondeur à la taille du décalage de fréquence généré dans le transpondeur.

**2.** Procédé selon la revendication 1, **caractérisé en ce que** le commutateur HF est un inverseur d'antenne.

Fig. 1

Fig.2

Fig. 3